# EUROPEAN PATENT APPLICATION

(11) **EP 1 511 196 A2**
(43) Date of publication of application: **02.03.2005**
(21) Application number: 04019898.8
(22) Date of filing: 23.08.2004
(51) Int. Cl.: H04B 10/155

(54) **Scheme for reducing low frequency components in an optical transmission network**

(30) Priority: 28.08.2003 US 651158
(71) Applicant: ALCATEL, 75008 Paris (FR)
(72) Inventor: Butler, David J., Richardson, TX 75080 (US); Schuder, Kurt, Dallas, TX 75208 (US)
(74) Representative: Dreiss, Fuhlendorf, Steimle & Becker

(57) **Abstract**

A system and method for reducing undesirable components in optical signals in an optical transmission network. A block coding scheme is implemented that is matched to the spectral characteristics of one or more optical components of a transmission path, e.g., filters, optical media, et cetera, whereby the source data is encoded for shifting the power density spectra of the optical signals.

## Description

### BACKGROUND OF THE INVENTION

### Technical Field of the Invention

The present invention generally relates to optical transmission networks. More particularly, and not by way of any limitation, the present invention is directed to a scheme for reducing low frequency components in an optical transmission network.

### Description of Related Art

It is well known that the potential of optical fiber transmission to provide high capacity, reduced circuit cost, and compatibility with existing digital communications networks makes it very attractive for both short-haul and long-haul applications. One of the most important characteristics of a lightwave transmission system is how large a distance can be spanned between a receiver and a transmitter while maintaining the integrity of the transmitted data. Such systems can be limited by the output power of the transmitter, the receiver performance characteristics, specifically receiver sensitivity, and spectral characteristics associated with the transmission media and optical components such as filters and the like. The method of modulating the digital output from a transmitter can also greatly. influence the distance separating the transmitter from the receiver. Modulating a digital lightwave output generates the digital "1"'s and digital "0'" s that are transmitted, and hence determines the content and integrity of the digital signal. From an economic viewpoint, the distance that can be spanned between a transmitter and a receiver, while maintaining data integrity, determines the expenditures that must be made to physically lay fiber in the ground or to install repeaters and other supporting equipment.

One way to control the output of a transmitter disposed in a digital lightwave communications system is to directly modulate the light source, e.g., a laser source. For example, the laser could be turned on and off at intervals, thus generating digital 1's (when the light source is on) and digital 0's (when the light source is off). This can be accomplished by turning the current to the laser on and off. While this method may work in lower speed applications, in high-speed digital lightwave communications it is not practical to directly modulate the output of the laser because, as the current to the laser is changed, the wavelengths of the laser outputs are also slightly changed.

Direct laser modulation could thus cause significant dispersion in each of the different wavelengths-traveling along a fiber optic cable, resulting in noise and data corruption at the far end (i.e., receiver end) of a high-speed digital lightwave system. This is because, particularly in a directly modulated laser system, multiple wavelengths are introduced by the modulation process. Each of these wavelengths has a slightly different propagation time, resulting in overlap at the receiver and therefore in possible data corruption and/or loss. In systems employing Wavelength Division Multiplexing (WDM) schemes, a significant amount of noise also results from carrying multiple wavelengths on a single fiber. This can result in loss of receiver sensitivity, because it is more difficult for the receiver to distinguish between the digital 1's and 0's, and hence to interpret the data carried by the signal.

Accordingly, current high-speed digital lightwave communications systems use modulators instead to modulate the laser output. Modulators do not affect the wavelengths carrying the data signal as much as direct modulation. However, these modulators require a data amplitude input (which data is typically in the range of one or more Gigabits per second (Gbps), i.e., in the radio frequency or RF range) and bias point that must be set and maintained at or near an optimum value for each modulator. Otherwise, the resulting wavelength shift in the transmitted data, along with the inherent noise and dispersion prevalent in lightwave transmission systems, can result in the signals received at the receiver being noisy and difficult to differentiate.

Moreover, the aforementioned shortcomings are further exacerbated by the use of non-optimized optical filter components in a fiber transmission path. In particular, where specific components of an optical signal are required to be transmitted, only perfectly centered and matched filters need to be used so that there is no signal dispersion in the unwanted regions of the power spectrum. The requirement of such centered optics optimized for a particular transmission application not only imposes stringent economic constraints, but is impractical in the long run as well, since the optical characteristics of the components may vary over time.

### SUMMARY OF THE INVENTION

Accordingly, the present invention advantageously provides a scheme for reducing undesirable components in optical signals in an optical transmission network. A block coding scheme is implemented that is matched to the spectral characteristics of one or more optical components of a transmission path, e.g., filters, optical media, et cetera, whereby the source data is encoded for shifting the power density spectra of the optical signals into a more desirable band.

In one aspect, the present invention is directed to an optical transmission network wherein low frequency components associated with the optical signals are suppressed. A data source is provided as part of a transmitter system for generating data operable to be transmitted via an optical transmission medium. A block encoder associated with the data source is operable to encode the data signals generated by the data source. The transmitter system also includes a modulator for modulating an optical source based on the encoded data. An optical filter component is provided for filtering a portion of a power spectral density function associated with the modulator's output. A receiver system coupled to the optical transmission medium includes a demodulator and a block decoder that correspond, respectively, to the transmitter system's modulator and block encoder, wherein the block encoder is operable to encode the data signals such that low frequency components are suppressed in the optical filter's output.

In another aspect, the present invention is directed to an integrated modulator system for an optical signal based on a digital data signal. In one exemplary embodiment, the modulator system comprises a filter with a passband for filtering the optical signal and a block encoder operating on the digital data signal for suppressing spectral density of at least a portion of the optical signal based on the filter's passband.

In yet another aspect, the present invention is directed to a method for reducing low frequency components in an optical transmission network. The method includes the operation of determining optical characteristics of a filter component disposed in the optical transmission network. A determination is made with respect to a cut-off region of a power spectral density function associated with the filter component's output. A matching block encoder is implemented wherein the block encoder is operable to encode digital data generated by a data source such that low frequency power spectra are suppressed in the cut-off region of the power spectral density function associated with the filter component. In a still further aspect, the various operations of the claimed method may be implemented in suitable structural components comprising hardware, firmware, or software, or any combination thereof.

### BRIEF DESCRIPTION OF THE DRAWINGS

A more complete understanding of the present invention may be had by reference to the following Detailed Description when taken in conjunction with the accompanying drawings wherein:
FIG. 1 depicts a conventional optical transmission network wherein non-optimized optical components give rise to low frequency power density spectra;
FIG. 2A depicts an exemplary power spectral density function associated with the output of a modulator disposed in the conventional optical transmission network of FIG. 1;
FIG. 2B depicts an exemplary power spectral density function associated with the output of a non-optimized filter disposed in the conventional optical transmission network of FIG. 1;
FIG. 3 depicts an exemplary optical transmission network provided in accordance with one embodiment of the present invention wherein low frequency power density spectra are suppressed;
FIG. 4 depicts exemplary power spectral density functions associated with the optical transmission network of FIG. 3;
FIG. 5 is a flow chart of an embodiment of a method of the present invention for implementing a scheme capable of suppressing low frequency components in an optical transmission network; and
FIGS. 6A and 6B depict a 3b4b block encoder and its state diagram for illustrative use in an exemplary optical transmission network in accordance with the teachings of the present invention.

### DETAILED DESCRIPTION OF THE DRAWINGS

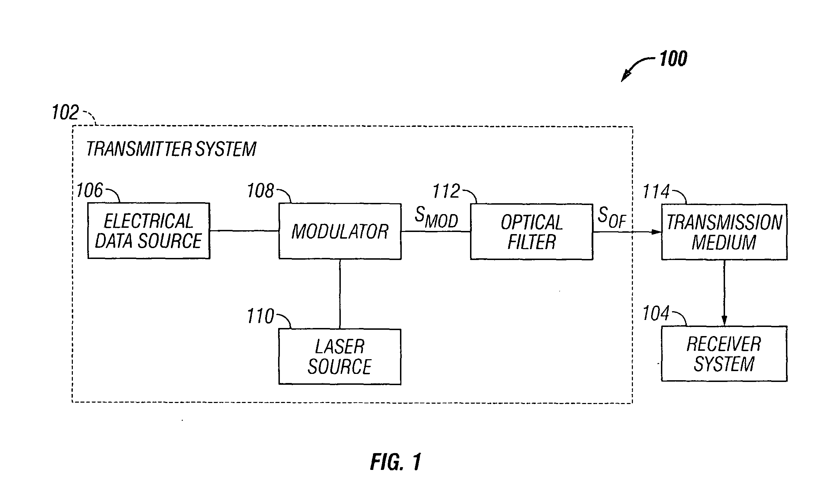

In the drawings, like or similar elements are designated with identical reference numerals throughout the several views thereof, and the various elements depicted are not necessarily drawn to scale. Referring now in particular to FIG. 1, depicted therein is an exemplary conventional optical transmission network 100 wherein non-optimized optical components can give rise to low frequency power density spectra associated with the transmitted optical data signals. It should be recognized by one of ordinary skill in the art that the optical transmission net work 100 is shown as a highly simplified functional block diagram for the sake of clarity and generality. A transmitter system 102 comprises an electrical data source 106 operable to generate digital pulse train data which can be in any known format such as, e.g., the Non-Return-to-Zero (NRZ) or Return-to-Zero (RZ) format. An optical modulator 108 is operable to modulate a laser source 110 based on the digital electrical data so as to generate modulated data suitable for transmission via an optical medium 114. An optical filter block 112 is disposed thereafter to shape the power spectral density (PSD) of the modulator output (S_{MOD}) such that only a portion of the PSD function, preferably having only the desired components representing the full bandwidth of the data signal, is transmitted via the optical medium 114. A receiver system 104 disposed at the receiving end of the transmission network 100 is provided with appropriate optical components, opto-electrical components, and electrical components to effectuate signal reception, demodulation/conversion and the like.

As pointed out in the Background section of the present patent application, components such as optical filters do not typically exhibit optimal (or, ideal) performance characteristics, especially over a long period of time. In other words, their transfer functions operate on input PSD functions in a fashion that gives rise to output signals having components that are not optimized for transmission, thereby resulting in overall system inefficiency. Such concerns are particularly exacerbated where specific portions of a PSD function associated with the output of a modulator are required to be shaped in a predetermined fashion.

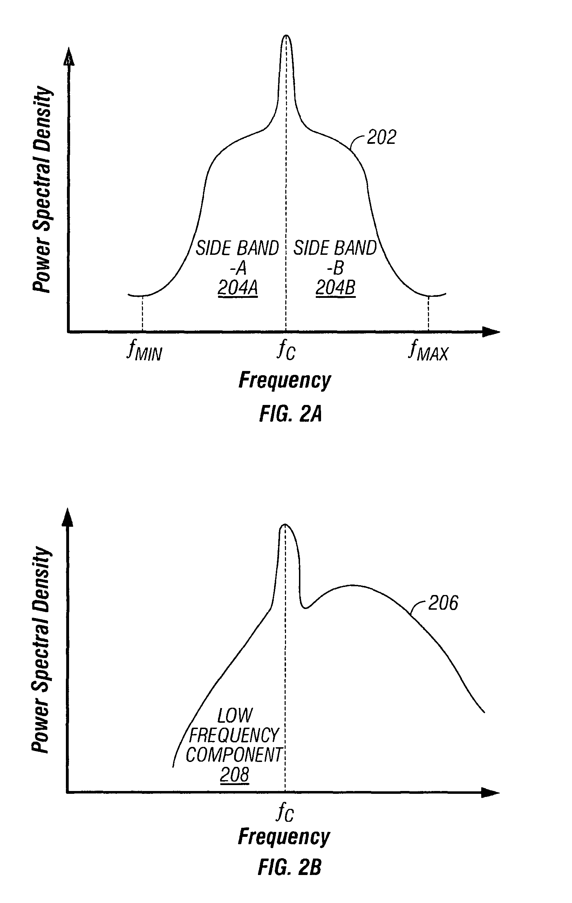

FIG. 2A depicts an exemplary PSD function associated with the output of a modulator conventionally disposed in an optical transmission network, e.g., modulator 108 of the network 100 described hereinabove. As is well known, conventional intensity modulation creates an optical spectrum that is mirror-imaged around a carrier wave. Reference numeral 202 refers to the PSD function, S_{MOD}, associated with the modulator 108 that is centered around the carrier frequency (f_{c}) within a bandwidth defined by lower and higher frequency limits (f_{MIN} and f_{MAX}). The spectrum on either side of the carrier frequency is mutually redundant, since only one side (i.e., sideband) is actually needed to represent all the data generated by a data source disposed in the optical transmission network. In FIG. 2A, reference numerals 204A and 204B refer to the two sidebands, Sideband-A and Sideband-B, of the S_{MOD} spectrum 202. Because of the spectral redundancy, known techniques such as Vestigial Sideband (VSB) transmission attempt to provide only one half of the bandwidth, namely, the higher frequency Sideband-B 204B, for downstream transmission by filtering out the other half, i.e., the lower frequency Sideband-A 204A. Since the filtering process is less than ideal (due to the non-optimal characteristics of a filter component typically deployed), the resulting PSD function associated with the optical filter output (S_{OF}), usually contains a lower frequency component. FIG. 2B depicts an exemplary PSD function 206 associated with the output of a non-optimized filter disposed in an optical transmission network, e.g., filter 112 of the network 100 set forth above. As depicted, the PSD function 206 includes a low frequency component 208 that is also transmitted via the optical medium, thereby negatively impacting the overall efficiency of the optical transmission network. Additional details regarding the VSB transmission technique may be found in the following commonly owned co-pending patent application: "Optical Vestigial Sideband Transmitter/Receiver," Application No. 10/173,378, filed June 17, 2002 (Alcatel Docket Number 139016), cross-referenced hereinabove.

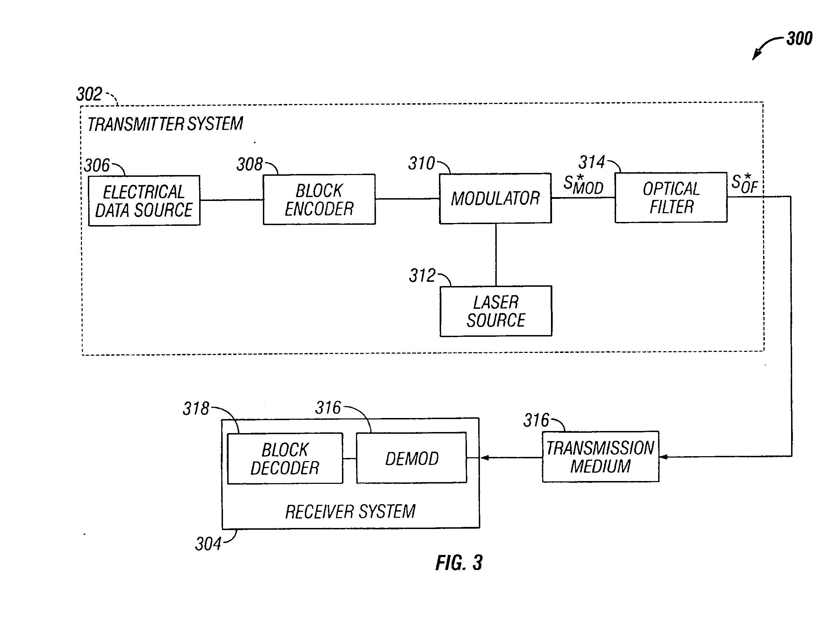

Referring now to FIG. 3, shown therein is an exemplary optical transmission network 300 provided in accordance with one embodiment of the present invention wherein undesirable low frequency power density spectra are advantageously suppressed by using a block encoding/decoding scheme. Again, it should be readily recognized by those skilled in the art that the exemplary optical transmission network 300 is shown as an abstract functional block diagram solely for the sake of simplicity and generality and not by way of any limitation. A transmitter system 302 includes an electrical data source 306 operable to generate digital pulse train data (e.g., digital data having the Non-Return-to-Zero (NRZ) or Return-to-Zero (RZ) format). A block encoder 308 is provided for encoding the digital data generated by the data source 306 in a manner such that the cumulative transfer function characteristics of a non-optimized optical filtering process of the transmission network are taken into account for generating a power spectrum that is devoid of low frequency components. Any known or heretofore unknown optical modulator 308 (e.g., a Mach-Zehnder modulator) is operable to modulate a laser optical source 312 based on the block-encoded digital electrical data so as to generate modulated data suitable for transmission via an optical medium 316 (e.g., a single- or multi-mode fiber, using known carrier wavelengths, such as 1300 nm or 1500 nm). In one embodiment, the optical source 312 may comprise a Continuous-Wave (CW) laser source. Additionally, depending on implementation requirements, the optical source 312 may comprise a.low chirp or high chirp laser system.

An optical filter component 314 is provided to shape the power spectral density (PSD) of the modulated output (S^{*}_{MOD}) such that only the desired region thereof is filtered for transmission. A receiver system 304 disposed at the receiving end of the transmission network 300 is provided with appropriate components such as demodulator 316 and block decoder 318, in addition to other related optoelectronics, for processing the received data. Although the optical filter 314 is shown to be associated with the transmitter system 302 of the optical transmission network 300, it should be apparent that in a different embodiment the filtering functionality may be co-located at the receiving system 304, in which case both sidebands of the S^{*}MOD power density function are transmitted through the optical medium 316.

As alluded to in the foregoing, the block encoder 308 is preferably designed to compensate for the non-optimized characteristics of one or more optical components of a transmission path, which can include filter components, physical media components, and the like. Any known or heretofore unknown block coding scheme may be used in accordance with the teachings of the present invention, which coding scheme can be implemented in a suitable hardware/firmware realization (e.g., a gate array chip set or an application-specific integrated circuit), for shaping the digital data signals to counteract the effect of a non-optimized optical component. Accordingly, a variety of block code generators may be provided in a functional block that can be programmed, on an as-needed basis, to select a particular coding scheme that is appropriate for a given filter/media component combination. Thus, in one implementation, the block encoder may be operable to be programmed into an OFF condition, based on the spectral characteristics of the filter used. As is well known, block coding is an mb/nb binary coding method that maps m binary bits of data to blocks having n bits each for transmission, where m < n. For instance, binary coding schemes such as 3b4b or 7b8b schemes may be implemented that are tuned to the spectral characteristics of the optical components of a particular transmission network.

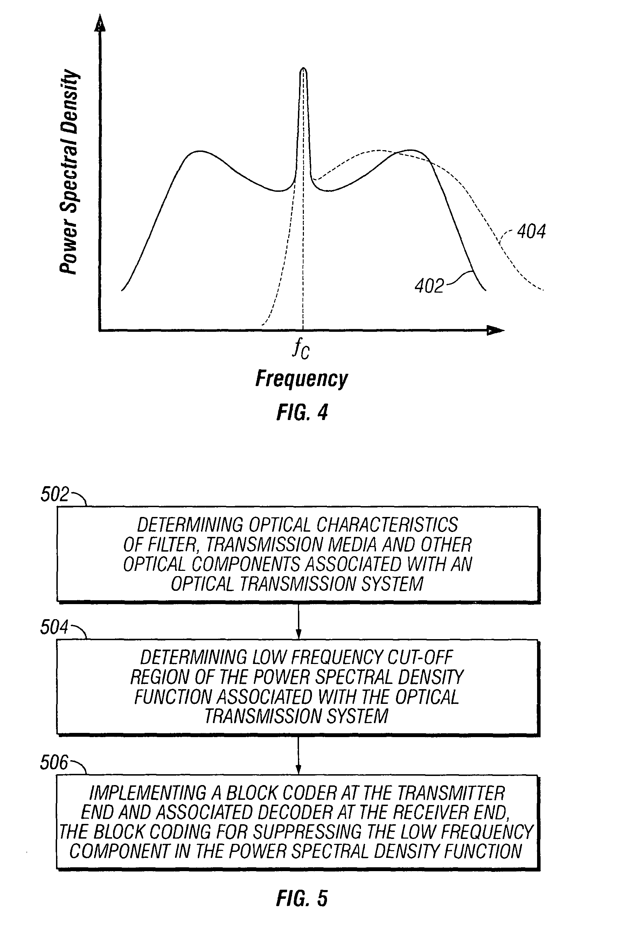

FIG. 4 depicts exemplary PSD functions associated with the optical transmission network 300 of FIG. 3 upon employing a suitable block coding scheme. Reference numeral 402 refers to the PSD function (S^{*}_{MOD}) associated with the modulated encoded data output. Reference numeral 404 refers to the PSD function (S^{*}_{OF}) associated with the output of the non-optimized optical filter disposed in the transmission network.

FIG. 5 is a flow chart of an embodiment of a method of the present invention for implementing a scheme capable of suppressing low frequency components in an optical transmission network. For a given transmission plant, transfer function characteristics of the various constituent optical components are determined and parameterized (block 502). Depending upon the transmission requirements, filter passband functionality, et cetera, a requisite cut-off region (e.g., a low frequency region) in the power spectral density function associated with the optical signals to be transmitted is determined (block 504). A matching block encoder/decoder is implemented in the transmission path (encoding at the source and decoding at the destination) that is designed to suppress the spectral components in the requisite cut-off region of the PSD function of the transmission system (block 506). As can be appreciated, appropriate hardware/software structures .(e.g., instructions provided on computer-accessible media) may be implemented in an optical node having advanced capabilities for automatically executing the aforesaid procedures as and when needed (for instance, where the optical characteristics of a filter vary over time, when a new filter is installed, and the like).

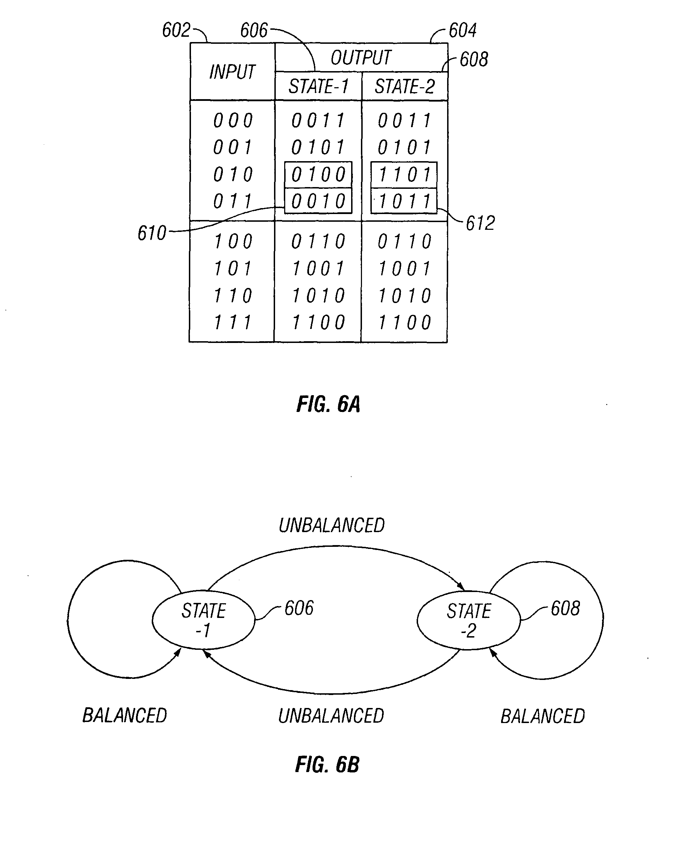

Referring now to FIGS. 6A and 6B, depicted therein is an exemplary 3b4b block encoder and its state diagram that may be implemented in an optical transmission network in accordance with the teachings of the present invention. Reference numeral 602 refers to the input to the block encoder which comprises eight 3-bit chunks of the digital data provided by a data source. The encoder's output 604, which transitions between two states, STATE-1 606 and STATE-2 608, comprises 4-bit nibbles, each encoding a particular 3-bit input chunk. As long as balanced 4-bit output nibbles are transmitted, the encoder does not change its state, as exemplified by the state transition diagram of FIG. 6B. There are four unbalanced code words, as denoted by reference numerals 610 and 612, in the encoder output, however. If one of these four unbalanced code words is transmitted, the encoder changes its state and transmits the next time a code word of opposite sign.

The following features or combinations of features also constitute advantageous embodiments of the present invention:
- An optical transmission network, comprising: a data source for generating data operable to be transmitted via an optical transmission medium; a block encoder associated with said data source, said block encoder operating to encode data generated by said data source; a modulator for modulating an optical source based on said encoded data; an optical filter component for filtering a portion of a power spectral density function associated with said modulator's output; and a receiver system coupled to said optical transmission medium, said receiver system including a demodulator and a block decoder that correspond, respectively, to said modulator and said block encoder, wherein said block encoder is operable to encode said data such that low frequency components are suppressed in said optical filter's output.
- The optical transmission network as described above, wherein said data source, said block encoder and said modulator form a transmitter system, and further wherein said optical filter is co-located with said transmitter system.
- The optical transmission network as described above, wherein said optical filter is co-located with said receiver system.
- The optical transmission network as described above, wherein said optical transmission medium comprises an optical fiber.
- The optical transmission network as described above, wherein said data source is operable to generate data in a Non-Return-to-Zero (NRZ) format.
- The optical transmission network as described above, wherein said data source is operable to generate data in a Return-to-Zero (RZ) format.
- The optical transmission network as described above, wherein said modulator comprises a Mach-Zehnder (MZ) modulator.
- The optical transmission network as described above, wherein said optical source comprises a Continuous-Wave (CW) laser source.
- The optical transmission network as described above, wherein said block encoder comprises a 3b4b encoder.
- The optical transmission network as described above, wherein said block encoder comprises a 7b8b encoder.
- The optical transmission network as described above, wherein said optical source comprises a low chirp laser system.
- The optical transmission network as described above, wherein said optical source comprises a high chirp laser system.
- The optical transmission network as described above, wherein said block encoder is operable to be programmable for selecting different kinds of block encoding based on spectral characteristics of said optical filter component.
- The optical transmission network as described above, wherein said block encoder is operable to be programmable for selecting different kinds of block encoding based on spectral characteristics of said optical transmission medium.
- The optical transmission network as described above, wherein said block encoder is operable to be programmed into an OFF condition based on spectral characteristics of at least one of said optical filter component and said optical transmission medium.

The described and claimed integrated modulator system for an optical signal based on a digital data signal may have one or more of the following advantageous features:
- said block encoder comprising a 3b4b encoder;
- said block encoder comprising a 7b8b encoder;
- further including a laser optical source that is operable to be modulated by said digital data signal using a modulator;
- wherein said modulator comprises Mach-Zehnder modulator;
- wherein said laser optical source comprises a Continuous-Wave (CW) laser source.

Based upon the foregoing Detailed Description, it should be readily apparent that the present invention advantageously provides a scheme for reducing the effect of non-optimized optical components disposed in a transmission network by matching their performance characteristics with a suitable block coding technique. It is believed that the operation and construction of the present invention will be apparent from the foregoing Detailed Description. While one or more of the exemplary embodiments of the invention shown and described have been characterized as being preferred, it should be readily understood that various changes and modifications could be made therein without departing from the scope of the present invention as set forth in the following claims. For instance, it should be appreciated that the optical transmission network of the present invention may be implemented as part of a long-haul network or a short-haul network, using such techniques as Wavelength Division Multiplexing. In addition to the block encoding scheme as set forth herein, circuitry for source sampling, other channel and/or line coding, sample quantization, etc. may also be included as part of an exemplary optical transmission network. Moreover, the teachings of the present invention may be practiced in conjunction with a variety of laser sources, modulators, optical filters and transmission media, with any level of component and system integration. By way of illustration, the block encoding functionality may be built into an integrated modulator unit at the source. A further level of integration may result in a modulator system having the optical filter functionality incorporated therein. Likewise, an integrated modulator/laser may be used as an optical source. Accordingly, all these and other related additions, variations, substitutions, modifications, and embodiments are deemed to be in the ambit of the present invention defined solely by the claims appended immediately below.

## Claims

1. An integrated modulator system for an optical signal based on a digital data signal, comprising:
a filter with a passband for filtering said optical signal; and
a block encoder operating on said digital data signal for suppressing spectral density of at least a portion of said optical signal based on said filter's passband.

2. The integrated modulator system for an optical signal based on a digital data signal as set forth in claim 16, wherein said block encoder is operable to suppress spectral density associated with low frequency components of said optical signal.

3. The integrated modulator system for an optical signal based on a digital data signal as set forth in claim 16, wherein said block encoder is operable to be programmable based on said filter's passband.

4. The integrated modulator system for an optical signal based on a digital data signal as set forth in claim 16, wherein said filter is operable in a Vestigial Sideband (VSB) transmitter.

5. The integrated modulator system for an optical signal based on a digital data signal as set forth in claim 16, wherein said block encoder is operable to be programmed into an OFF condition based on said filter's passband characteristics.

6. A method for reducing low frequency components in an optical transmission network, comprising:
determining optical characteristics of a filter component disposed in said optical transmission network;
determining a cut-off region of a power spectral density function associated with said filter component's output; and
implementing a matching block encoder operable to encode digital data generated by a data source such that low frequency power spectra are suppressed in said cut-off region of said power spectral density function.

7. The method for reducing low frequency components in an optical transmission network as set forth in claim 26, wherein said block encoder is operable to be programmable for selecting different kinds of block coding based on said filter component's optical characteristics.

8. The method for reducing low frequency components in an optical transmission network as set forth in claim 26, further including the step of determining spectral characteristics of an optical transmission medium disposed in said optical transmission network.

9. The method for reducing low frequency components in an optical transmission network as set forth in claim 28, wherein said block encoder is operable to be programmable for selecting different kinds of block coding based on said optical transmission medium's spectral characteristics.
